# FASCICULE DE BREVET EUROPEEN

(11) **EP 3 038 561 B1**
(45) Date de publication et mention de la délivrance du brevet: **22.03.2017**
(21) Numéro de dépôt: 14767050.9
(22) Date de dépôt: 11.08.2014
(51) Int. Cl.: A61C 5/40, B23H 9/00

(54) **INSTRUMENT ENDODONTIQUE À SURFACES RUGUEUSES, ET PROCÉDÉ DE FABRICATION D'UN TEL INSTRUMENT**
ENDODONTISCHES INSTRUMENT MIT RAUEN OBERFLÄCHEN SOWIE VERFAHREN ZUR HERSTELLUNG EINES SOLCHEN INSTRUMENTS
ENDODONTIC INSTRUMENT WITH ROUGH SURFACES, AND METHOD FOR PRODUCING SUCH AN INSTRUMENT

(30) Priorité: 30.08.2013 FR 1358351
(43) Date de publication de la demande: 06.07.2016
(73) Titulaire: Neolix, 53600 Châtres-la-Forêt (FR)
(72) Inventeur: PERNOT, Jacques, 25870 Vieilley (FR); ROLLAND, Xavier, 53000 Laval (FR); EUVRARD, Hubert, 25000 Besançon (FR)
(74) Mandataire: Gicquel, Frédéric
(86) Numéro de dépôt international: PCT/FR2014/052074
(87) Numéro de publication internationale: WO 2015/028743

(56) Documents cités:
- EP-A2- 1 354 566
- EP-B1- 0 895 462
- WO-A1-2010/130642

## Description

### 1. Domaine de l'invention

La présente invention concerne les instruments endodontiques, permettant à un dentiste de travailler la surface d'un canal dentaire, à l'intérieur d'une dent.

L'invention concerne également la fabrication de tels instruments endodontiques.

### 2. Etat de l'art

De nombreux types d'instruments endodontiques sont actuellement utilisés par les dentistes. Ces instruments endodontiques sont généralement des instruments fins et relativement souples, super élastiques, pouvant être insérés par le dentiste dans le canal d'une dent afin de nettoyer ce canal. Ils peuvent être utilisés de manière manuelle, ou entrainés en rotation, continue ou alternée, ou en translation, ou en vibration, ou une combinaison de ces mouvements, par un porte-instrument adapté. De tels instruments sont généralement fabriqués par meulage dans l'art antérieur, et présentent généralement des arêtes coupantes, à l'intersection de surfaces formées sur l'instrument.

Le document WO2010/130642 A décrit par exemple un instrument similaire réalisé par électroérosion.

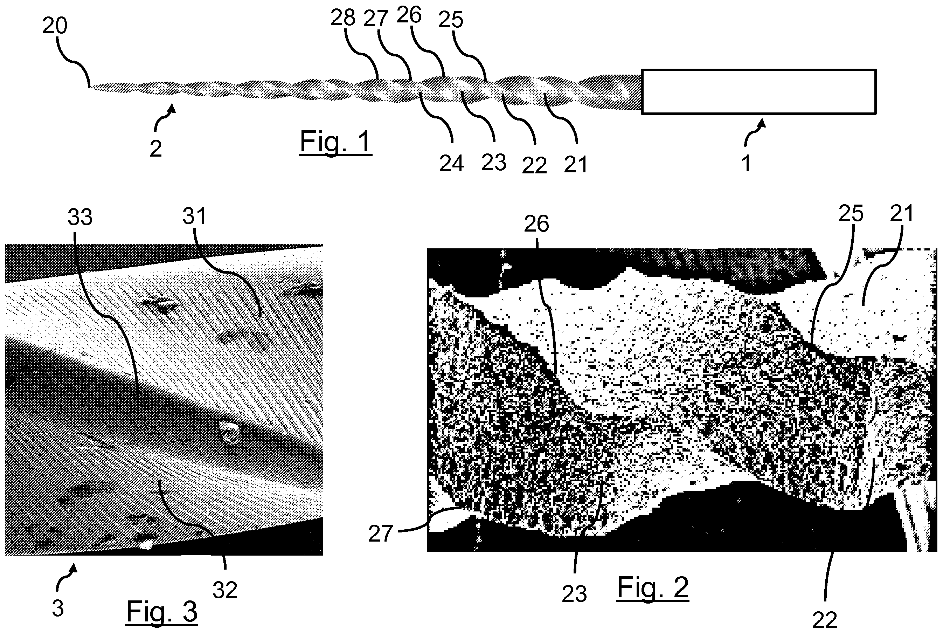

Dans certains cas, un instrument endodontique peut également présenter sur ses surfaces des stries générées par la meule, lui conférant des propriétés abrasives. De telles stries sont visibles sur la figure 3 de la demande, représentant à fort grossissement un instrument endodontique 3 de l'art antérieur. Ces stries forment alors des lignes ou des rayures régulières sur les faces représentées 31 et 32. A l'intersection de différentes faces, les stries conduisent à l'apparition de bavures, qui sont fragiles et risquent de se détacher à l'intérieur de la dent du patient. Ces bavures sont donc éliminées, lors de la fabrication de l'outil, par un traitement mécanique tel qu'un microbillage ou par un traitement électrochimique tel qu'un électro-polissage. Ces traitements ont pour effet secondaire d'arrondir les arêtes, telle que l'arrête 33 représentée sur la figure 3, et donc de diminuer l'efficacité de coupe de l'instrument.

Dans d'autres cas, les faces de l'instrument endodontique sont recouvertes de revêtements les rendant abrasives. Un tel revêtement est cependant fragile, et se détache facilement de la face de l'instrument. Celui-ci perd alors son caractère abrasif, et des fragments de revêtement peuvent rester dans la dent du patient.

De façon plus courante, on cherche au contraire, lors de la fabrication des instruments endodontiques, à éliminer autant que possible toutes les aspérités ou irrégularités sur les faces et les arêtes de l'instrument, pour éviter les amorces de rupture. Cette recherche de faces d'arêtes parfaitement régulière augmente la difficulté et le coût de production de ces instruments. De tels instruments endodontiques sont le plus souvent usinés par meulage, ce qui confère un aspect lisse et brillant à leurs faces. Cet aspect lisse est encore renforcé quand une opération additionnelle de lissage mécanique ou électrochimique intervient après l'usinage.

La présence des arêtes tranchantes sur l'instrument endodontique permet le travail de la paroi interne du canal de la dent. Cependant, de telles arêtes ont pour effet la découpe de gros copeaux dans le canal dentaire, qui peuvent être difficiles à sortir de ce canal. Par ailleurs, cette découpe de gros copeaux peut générer des efforts importants sur l'instrument endodontique, ce qui entraîne des risques de pincements de celui-ci voire de casse de l'instrument à l'intérieur de la dent.

### 3. Objectifs de l'invention

La présente invention a pour objectif de palier les inconvénients de l'art antérieur.

En particulier, la présente invention a pour objectif de fournir un instrument endodontique permettant le travail de la surface du canal dentaire en générant un effort de coupe moins important que les instruments de l'art antérieur et, en limitant l'effet de vissage, permet un risque réduit de coincement ou de rupture de l'instrument endodontique dans la dent du patient.

L'invention a également pour objectif de fournir un tel instrument endodontique qui génère la production de copeaux de tailles réduites, et qui permette l'évacuation facile de ces copeaux.

L'invention a encore pour objectif de fournir un tel instrument qui présente des propriétés abrasives renforcées.

Enfin, l'invention a encore pour objectif de fournir un procédé efficace de fabrication de tels instruments endodontiques qui puissent être mis en oeuvre plus facilement que les procédés de fabrication de l'art antérieur, et qui soient moins onéreux.

### 4. Exposé de l'invention

Ces objectifs, ainsi que d'autres qui apparaîtront plus clairement par la suite, sont atteints à l'aide d'un instrument endodontique, comprenant un manche destiné à être solidarisé à un porte-instrument et une partie active destinée à être introduit dans un canal dentaire, la partie active comprenant une pluralité de faces, et au moins une arête formée par l'intersection de deux faces ; au moins deux desdites faces adjacentes présentent une surface présentant une rugosité, ladite surface desdites faces présentant une pluralité de cratères lui conférant ladite rugosité, l'arête formée par l'intersection desdites deux faces présentant le profil d'une ligne déchiquetée irrégulière dans l'espace présentant au moins un écart par rapport à la ligne moyenne supérieur à 0,5 µm, caractérisé en ce que la rugosité est caractérisée par un écart moyen arithmétique par rapport à la ligne moyenne Ra, choisie tel que 0,5 µm < Rₐ < 4,5 µm, et en ce que lesdits cratères sont répartis sur ladite surface à raison de 50 à 500 cratères par mm 2.

Ainsi, a rugosité des faces, au moins à proximité des arêtes, et l'irrégularité des arêtes qui en résulte, permettent que l'instrument produise des copeaux plus petits, qui sont par ailleurs broyés par les faces rugueuses et sont donc plus facilement évacuées de la dent du patient. Les efforts de coupe sont par ailleurs réduits par les arêtes irrégulières.

Avantageusement, l'instrument est constitué d'un alliage de Nickel et de Titane.

De façon avantageuse, ladite surface desdites faces présente une pluralité de cratères lui conférant ladite rugosité.

Une telle conformation permet d'obtenir une rugosité en générant moins de fragilité dans l'instrument.

De manière plus avantageuse, la répartition des cratères sur ladite surface est de 50 à 100 cratères par mm².

Cette densité particulière (50 à 100 cratères par mm²) et l'utilisation de l'instrument endodontique en mode « vibration » sont particulièrement adaptées et avantageux pour un travail d'ébauche.

D'une autre manière plus avantageuse, la répartition des cratères sur ladite surface est de 200 à 300 cratères par mm².

Cette densité (200 à 300 cratères par mm²) et l'utilisation de l'instrument endodontique en mode « rotation continue » sont particulièrement adaptées et avantageux pour un travail de précision et de finition.

De préférence, lesdites faces présentent des formes hélicoïdales, de façon à former des arêtes hélicoïdales.

L'invention a également pour objet un procédé de fabrication d'un instrument endodontique tel que décrit ci-dessus, qui comprend une étape de découpe d'un barreau d'alliage de nickel-titane par un procédé d'électroérosion à fil, de façon à y former une pluralité de faces présentant au moins une arête à l'intersection de deux faces ; et une étape de nettoyage de l'instrument formé par un procédé chimique, de façon à préserver la rugosité desdites faces.

Avantageusement, ladite étape de découpe par un procédé d'électroérosion à fil met en oeuvre un fil en laiton, en laiton revêtu de zinc, en molybdène ou en tungstène, présentant un diamètre compris entre 0,02 mm et 0,5 mm.

De préférence, ladite étape de découpe met en oeuvre un fluide diélectrique constitué d'eau déionisée ou d'hydrocarbure.

De préférence, ladite étape de nettoyage est réalisée en trempant ledit instrument dans un bain acide soumis à des ultrasons.

Selon un mode de réalisation avantageux, ledit instrument est traversé par un courant électrique lors de ladite étape de nettoyage.

Selon un autre mode de réalisation avantageux, le procédé comprend une étape de traitement thermique conduite séparément des étapes de découpe et de nettoyage, l'étape de traitement thermique consistant en une exposition de l'instrument endodontique en cours de fabrication à des températures de 300 à 600 degrés Celsius entre 10 minutes et 5 heures, à quoi il convient d'ajouter le temps requis pour un retour à température ambiante, brutalement, rapidement, ou lentement (entre quelques secondes et quelques heures). Cette exposition à la chaleur est préférentiellement effectuée en maintenant les instruments dans un four, dans un environnement pouvant être varié, par exemple air, gaz inerte (azote, argon), sous vide. L'exposition à la chaleur peut de manière alternative être réalisée en plongeant les instruments endodontiques dans un liquide, par exemple un bain de sels de nitrates.

### 5. Liste des figures

L'invention sera mieux comprise à la lecture de la description suivante d'un mode de réalisation préférentiel, donné à titre illustratif et non limitatif, et accompagné de figures parmi lesquels :
- la figure 1 est une vue d'un instrument endodontique selon un mode de réalisation possible de l'invention ;
- la figure 2 est une vue à un fort grossissement d'une portion de l'instrument endodontique de la figure 1 ;
- la figure 3, qui a été commenté ci-dessus, est une vue à un fort grossissement d'une portion d'un instrument endodontique de l'art antérieur.

### 6. Description détaillée d'un mode de réalisation

### 6.1 Instruments endodontiques

La figure 1 représente un instrument endodontique selon un mode de réalisation de l'invention. Cet instrument endodontique comporte un manche 1, destiné à être inséré dans un équipement porte-instrument, et une partie active 2 destinée à travailler la surface d'un canal dentaire. La partie active présente une pluralité de faces, dans le cas représenté quatre faces 21, 22, 23 et 24 qui s'enroulent de façon hélicoïdale depuis le manche 1 jusqu'à la pointe 20 de l'instrument. Aux intersections de ces faces, des arêtes 25, 26, 27 et 28 forment les parties tranchantes de l'instrument endodontique, qui lui permettent de travailler la surface du canal dentaire. Les angles entre les faces, formant les arêtes, sont compris entre 40° et 160°.

### 6.2 Surface rugueuse

La figure 2 est une vue de détail d'une portion de la partie active 2 de l'instrument endodontique. Comme le montre cette figure, les surfaces de chacune des faces de l'instrument endodontique ne sont pas planes, mais présentent des irrégularités rendant ces faces rugueuses. Ces irrégularités sont constituées par une multitude de cratères, de profondeur variable, conférant à la surface une rugosité se caractérisant par un écart moyen arithmétique par rapport à la ligne moyenne (critère statistique Ra) compris entre 0,5 et 4,5 µm. Ces cratères sont répartis à raison de 50 à 500 cratères par mm². De telles irrégularités ne sont pas des stries ou des lignes régulières usinées sur l'outil mais des creux et des bosses de dimensions aléatoires et irrégulières, conférant à la surface un aspect semblable à celui d'une céramique.

En fonction de la grosseur de l'instrument, la rugosité et la densité de cratère peuvent être ajustés. Par exemple :
- un instrument dont le diamètre à la pointe est de 0.10 mm a une rugosité entre 0.5 et 1 µm et une densité de 300 à 400 cratères par mm² ;
- un instrument dont le diamètre à la pointe est de 0.40 mm a une rugosité entre 3 et 4.5 µm et une densité de 100 à 200 cratères par mm².

La rugosité des différentes faces de l'instrument (rugosité qui peut varier d'une face à l'autre) confère naturellement à ces faces des caractéristiques abrasives. Cette rugosité étant constitutive de l'instrument, et non apportée par un revêtement externe, elle est particulièrement robuste et ne présente pas de risque de séparation de particule pouvant être perdue dans la dent du patient.

L'instrument endodontique pourvu d'une rugosité selon l'invention est particulièrement avantageux car il permet de laisser la surface usinée de la dentine dans sa granulométrie naturelle, alors qu'un instrument classique de l'art antérieur (arête arrondie) tasse la surface usinée (production de boue dentinaire).

La surface usinée avec sa granulométrie naturelle confère des avantages, dont au moins :
- une meilleure adhésion au cours de la mise en place d'un tenon radiculaire (aspect non lisse de la surface de mordançage) ;
- un meilleur environnement pour une restauration naturelle du canal.

### 6.3 Arêtes discontinues

Chacune des faces formant la partie active 2 présentant une surface irrégulière, les arêtes 25, 26, 27 et 28 formées par l'intersection de ces faces présentent également une forme accidentée irrégulière. Comme le montre la figure 2, chacune de ces arêtes présentent ainsi le profil d'une ligne déchiquetée (accidentée irrégulière). Cette ligne peut ainsi comporter des portions présentant un écart par rapport à la ligne moyenne pouvant aller jusqu'à un maximum compris entre 0,5 et 5,0 µm. Ces écarts par rapport à la ligne moyenne peuvent être dans n'importe quelle direction, de façon aléatoire.

### 6.4 Effet sur les efforts de découpe

Ainsi, quand l'instrument endodontique 1 est utilisé, les lignes de coupe de ces arêtes forment des successions de petites arêtes contigües, d'angles et de formes variables. De telles arêtes procurent à l'instrument une qualité de coupe accrue, radialement et axialement. Elles ont en effet l'effet de dents de scie irrégulières, qui ont pour effet de réduire les efforts de coupe. Ainsi, l'instrument endodontique subit des efforts de coupe moins importants, la racine de la dent du patient subit des efforts moins importants engendrant un stress moindre, le risque de casse de l'instrument et de fracturation de la racine de la dent sont réduits.

### 6.5 Effets sur les copeaux

Les arêtes de forme discontinue et irrégulière génèrent, lors de leur utilisation, la production de débris de petite taille. En effet, de telles arêtes ont pour effet de fragmenter, ou déchiqueter la dentine en formant de petit copeaux, ou débris, plutôt que les copeaux de grande taille produits par les arêtes lisses des instruments endodontiques de l'art antérieur.

Par ailleurs, les différentes faces de l'instrument ont tendance, du fait de leur rugosité élevée, à mieux entrainer les débris, qui sont ainsi mieux évacués. De plus, lorsque ces débris sont pris entre l'une des faces de l'instrument et la surface du canal dentaire, la surface abrasive les râpe et les réduit en poudre. Les copeaux sont ainsi remplacés par un mélange poudreux qui peut facilement être remonté à l'extérieur du canal dentaire. Les risques d'obstruction du canal par de gros copeaux, ou de blocage de l'instrument du fait de ces copeaux, sont ainsi fortement réduits.

### 6.6 Procédé de fabrication

Pour obtenir un instrument endodontique selon l'invention, dont les faces présentent des irrégularités rendant ces faces rugueuses et les arêtes irrégulières, il est possible de mettre en oeuvre un procédé d'usinage par électroérosion à fil. Un tel procédé consiste à arracher la matière par une pluralité d'arcs électriques, formant ainsi des cratères à la surface des pièces usinées et leur conférant un aspect rugueux. L'usinage par électroérosion à fil est une technique procédant par fusion, vaporisation et éjection de la matière. L'énergie est apportée par des décharges électriques passant entre deux électrodes, d'une part la pièce à usiner, et d'autre part le fil de coupe (ou d'usinage). L'usinage par électroérosion est connu pour générer des rugosités de l'ordre de 0.4 à 30 µm.

Pour la fabrication d'un instrument endodontique selon l'invention, le procédé d'usinage par électroérosion à fil peut être mis en oeuvre en utilisant un fil de coupe pouvant être par exemple en laiton, en laiton revêtu de zinc, en molybdène ou en tungstène, présentant un diamètre compris entre 0,02 mm et 0,5 mm. Le fluide diélectrique peut être constitué d'eau déionisée ou d'hydrocarbure. L'usinage peut être fait sur la base d'une barre ou d'un tube d'alliage en nickel-titane, dont la section peut être de forme variable (typiquement ronde ou carrée) et présentant généralement un diamètre ou un coté compris entre 0,1 mm et 3 mm.

Le procédé d'usinage par électroérosion mis en oeuvre pour fabriquer un instrument endodontique selon l'invention est adapté pour produire spécifiquement une rugosité se caractérisant par un écart moyen arithmétique par rapport à la ligne moyenne (critère statistique Ra) compris entre 0,5 et 4,5 µm.

Pour ce faire, afin d'obtenir une concentration d'énergie efficace et maitrisée, au diamètre du fil de découpe (environ 0.1 mm) est associé l'épaisseur de la découpe de chaque pièce (environ 0.1 mm) pour permettre de balayer un panel de qualité d'état de surface. De plus, l'usinage des pièces est réalisé sur la barre de façon à ménager un espacement entre chaque pièce de 10 à 100 mm afin de retrouver la relation diamètre de fil de découpe / épaisseur de la découpe de pièce, contrairement à des pièces collées les unes contre les autres, comme appliqué couramment en électroérosion à fil selon l'art antérieur.

Les cratères générant la rugosité des faces de l'instrument sont causés par les arcs électriques entre le fil d'usinage et l'instrument, à travers un fluide diélectrique isolant électriquement. Après cette étape d'usinage, l'instrument est soumis à un nettoyage de surface, permettant de supprimer spécifiquement la couche superficielle de 1 à 30 µm d'épaisseur générée par la découpe du matériau et les résidus provenant du fil d'usinage. Ce traitement en revanche n'a aucun effet de polissage des faces, et il n'altère pas les arêtes de l'instrument endodontique.

Cette étape de nettoyage est réalisée par voie chimique dans un bain acide avec des ultrasons, en présence ou non d'un courant électrique (traitement chimique ou électrochimique).

Le procédé de fabrication d'un instrument endodontique selon l'invention inclue aussi une étape de traitement thermique conduite séparément des étapes de découpe et de nettoyage. Cette étape de traitement thermique est notamment réalisée de manière indépendante, sans intervention sur l'instrument endodontique pendant le traitement thermique. Cette étape consiste à exposer l'outil endodontique en cours de fabrication, avant ou après l'étape de nettoyage de surface, à des températures de 300 à 600 degrés Celsius entre 10 minutes et 5 heures. Ce traitement thermique particulier permet de supprimer ou, à tous le moins, limiter l'élasticité, d'augmenter la ductilité et ainsi d'augmenter la résistance en fatigue de l'outil endodontique tout en conservant une dureté superficielle élevée des arêtes et des faces préservant ainsi de bonnes caractéristiques de coupe et de résistance à l'usure.

Lors de la découpe au fil, le matériau usiné entre en fusion occasionnant un échauffement superficiel sur la pièce. Ceci entraîne un changement superficiel de structure (martensite). La dureté superficielle est alors légèrement accrue lors de cette transformation mais des contraintes internes sont occasionnées. Le matériau à ce stade est en phase super élastique. En appliquant le traitement thermique décrit ci-dessus après la découpe au fil par électroérosion, les tensions internes sont libérées, la matière est homogénéisée et stabilisée, tout en abaissant très légèrement la dureté superficielle (de quelques Hv). Le matériau se retrouve donc dans une phase aux effets élastiques très limités avec une dureté préservée d'environ 260 Hv : matériau ductile, résistant à la fatigue.

La découpe d'instruments endodontiques en nickel-titane par un procédé d'électroérosion à fil suivie d'un traitement thermique opéré dans certaines conditions permet ainsi d'associer des bonnes caractéristiques de coupe, de résistance à l'usure et de résistance en fatigue.

## Revendications

1. Instrument endodontique, comprenant un manche (1) destiné à être solidarisé à un porte-instrument et une partie active (2) destinée à être introduit dans un canal dentaire,
la partie active comprenant une pluralité de faces (21, 22, 23, 24), et au moins une arête (25, 26, 27, 28) formée par l'intersection de deux faces ;
au moins deux desdites faces adjacentes présentent une surface présentant une rugosité, ladite surface desdites faces présentant une pluralité de cratères lui conférant ladite rugosité, l'arête formée par l'intersection desdites deux faces présentant le profil d'une ligne déchiquetée irrégulière dans l'espace présentant au moins un écart par rapport à la ligne moyenne supérieur à 0,5 µm,
**caractérisé en ce que** la rugosité est **caractérisée par** un écart moyen arithmétique par rapport à la ligne moyenne Ra, choisie tel que 0,5 µm < Ra < 4,5 µm,
et en ce que lesdits cratères sont répartis sur ladite surface à raison de 50 à 500 cratères par mm².

2. Instrument endodontique selon la revendication 1 **caractérisé en ce que** sa partie active (2) est constituée d'un alliage de Nickel et de Titane.

3. Instrument endodontique selon l'une quelconque des revendications 1 et 2, **caractérisé en ce que** lesdites faces (21, 22, 23, 24) présentent des formes hélicoïdales, de façon à former des arêtes (25, 26, 27, 28) hélicoïdales.

4. Procédé de fabrication d'un instrument endodontique selon l'une quelconque des revendications précédentes, **caractérisé en ce qu'**il comprend les étapes suivantes :
- une étape de découpe d'un barreau d'alliage de nickel-titane par un procédé d'électroérosion à fil, de façon à y former une pluralité de faces (21, 22, 23, 24) présentant au moins une arête (25, 26, 27, 28) à l'intersection de deux faces ;
- une étape de nettoyage de l'instrument formé par un procédé chimique, de façon à préserver la rugosité desdites faces.

5. Procédé de fabrication d'un instrument endodontique selon la revendication 4, **caractérisé en ce que** ladite étape de découpe par un procédé d'électroérosion à fil met en oeuvre un fil en laiton, en laiton revêtu de zinc, en molybdène ou en tungstène, présentant un diamètre compris entre 0,02 mm et 0,5 mm.

6. Procédé de fabrication d'un instrument endodontique selon l'une quelconque des revendications 4 et 5, **caractérisé en ce que** ladite étape de découpe met en oeuvre un fluide diélectrique constitué d'eau déionisée ou d'hydrocarbure.

7. Procédé de fabrication d'un instrument endodontique selon l'une quelconque des revendications 4 à 6, **caractérisé en ce que** ladite étape de nettoyage est réalisée en trempant ledit instrument dans un bain acide soumis à des ultrasons.

8. Procédé de fabrication d'un instrument endodontique selon l'une quelconque des revendications 4 à 7, **caractérisé en ce que** ledit instrument est traversé par un courant électrique lors de ladite étape de nettoyage.

9. Procédé de fabrication d'un instrument endodontique selon l'une quelconque des revendications 4 à 8, **caractérisé en ce qu'**il comprend une étape de traitement thermique conduite séparément des étapes de découpe et de nettoyage, l'étape de traitement thermique consistant en une exposition de l'instrument endodontique à des températures de 300 à 600 degrés Celsius entre 10 minutes et 5 heures.

## Patentansprüche

1. Endodontisches Instrument, einen Griff (1) umfassend, der dazu bestimmt ist, fest mit einem Instrumententräger verbunden zu werden, sowie einen aktiven Abschnitt (2), der dazu bestimmt ist, in einen Zahnkanal eingeführt zu werden, wobei der aktive Abschnitt eine Vielzahl von Seiten (21, 22, 23, 24) umfasst, sowie zumindest einen Grat (25, 26, 27, 28), der durch die Schnittlinie zweier Seiten gebildet wird;
wobei zumindest zwei der besagten benachbarten Seiten eine Oberfläche aufweisen, die eine Rauheit aufweist, wobei die besagte Oberfläche der besagten Seiten eine Vielzahl von Kratern aufweist, die ihr die besagte Rauheit verleiht, wobei der Grat, der durch die Schnittlinie der besagten beiden Seiten gebildet wird, das Profil einer unregelmäßigen zerhackten Linie im Raum aufweist, die zumindest eine Abweichung im Verhältnis zur mittleren Linie von mehr als 0,5 µm aufweist,
**dadurch gekennzeichnet, dass** die Rauheit durch eine mittlere arithmetische Abweichung im Verhältnis zur durchschnittlichen Linie Ra gekennzeichnet ist, die gemäß 0,5 µm < Ra < 4,5 µm ausgewählt wird,
und dadurch, dass die besagten Krater in einem Verhältnis von 50 bis 500 Krater je mm² auf der besagten Oberfläche verteilt sind.

2. Endodontisches Instrument nach Anspruch 1, **dadurch gekennzeichnet, dass** sein aktiver Abschnitt (2) aus einer Legierung aus Nickel und Titan gebildet wird.

3. Endodontisches Instrument nach einem der Ansprüche 1 und 2, **dadurch gekennzeichnet, dass** die besagten Seiten (21, 22, 23, 24) schneckenförmige Formen aufweisen, um schneckenförmige Grate (25, 26, 27, 28) zu bilden.

4. Verfahren zur Herstellung eines endodontischen Instruments nach einem der vorhergehenden Ansprüche, **dadurch gekennzeichnet, dass** es die folgenden Schritte umfasst:
- einen Schritt zum Ausschneiden einer Stange aus einer Nickel-Titan Legierung durch ein Draht-Elektroerosionsverfahren, um darin eine Vielzahl von Seiten (21, 22, 23, 24) zu bilden, die zumindest einen Grat (25, 26, 27, 28) an der Schnittlinie der beiden Seiten aufweisen;
- einen Schritt zum Reinigen des Instruments, das durch ein chemisches Verfahren gebildet wird, um die Rauheit der besagten Seiten zu bewahren.

5. Verfahren zur Herstellung eines endodontischen Instruments nach Anspruch 4, **dadurch gekennzeichnet, dass** der besagte Schritt des Zuschneidens durch Draht-Elektroerosionsverfahren einen Draht aus Messing, aus zinkbeschichtetem Messing, aus Molybdän oder Wolfram anwendet, der einen Durchmesser zwischen 0,02 mm und 0,5 mm aufweist.

6. Verfahren zur Herstellung eines endodontischen Instruments nach einem der Ansprüche 4 und 5, **dadurch gekennzeichnet, dass** der besagte Schritt des Zuschneidens eine dielektrische Flüssigkeit anwendet, die durch entionisiertes Wasser oder Kohlenwasserstoff gebildet wird.

7. Verfahren zur Herstellung eines endodontischen Instruments nach einem der Ansprüche 4 bis 6, **dadurch gekennzeichnet, dass** der Schritt zum Reinigen durchgeführt wird, indem man das besagte Instrument in ein Säurebad taucht, das Ultraschallwellen ausgesetzt ist.

8. Verfahren zur Herstellung eines endodontischen Instruments nach einem der Ansprüche 4 bis 7, **dadurch gekennzeichnet, dass** das am besagten Instrument beim besagten Reinigungsschritt ein elektrischer Strom angelegt wird.

9. Verfahren zur Herstellung eines endodontischen Instruments nach einem der Ansprüche 4 bis 8, **dadurch gekennzeichnet, dass** es einen Schritt zur Wärmebehandlung umfasst, der getrennt von den Schritten des Zuschneidens und des Reinigens durchgeführt wird, wobei der Schritt zur Wärmebehandlung darin besteht, das endodontische Instrument 10 Minuten bis 5 Stunden lang Temperaturen von 300 bis 600 Grad Celsius aussetzt.

## Claims

1. Endodontic instrument, comprising a handle (1) intended to be rigidly connected to an instrument holder and an active part (2) intended to be introduced into a dental canal,
the active part comprising a plurality of faces (21, 22, 23, 24), and at least one edge (25, 26, 27, 28) formed by the intersection of two faces;
at least two of said adjacent faces have a surface exhibiting roughness, said surface of said faces having a plurality of pits giving same said roughness, the edge formed by the intersection of said two faces having the profile of an irregular jagged line in space having at least one deviation with respect to the median line greater than 0.5 µm,
**characterised in that** the roughness is **characterised by** an arithmetic mean deviation with respect to the median line Ra, chosen such that 0.5 µm < Ra < 4.5 µm,
and in that said pits are distributed on said surface at a rate of 50 to 500 pits per mm².

2. Endodontic instrument according to claim 1 **characterised in that** the active part (2) thereof consists of a Nickel and Titanium alloy.

3. Endodontic instrument according to any one of claims 1 and 2, **characterised in that** said faces (21, 22, 23, 24) have helical shapes, so as to form helical edges (25, 26, 27, 28).

4. Method for manufacturing an endodontic instrument according to any one of the preceding claims, **characterised in that** it comprises the following steps:
- a step for cutting a nickel-titanium alloy bar by means of a wire electroerosion process, so as to form a plurality of faces (21, 22, 23, 24) therein having at least one edge (25, 26, 27, 28) at the intersection of two faces;
- a step for cleaning the instrument by a chemical process, so as to preserve the roughness of said faces.

5. Method for manufacturing an endodontic instrument according to claim 4, **characterised in that** said cutting step implements a brass, zinc-coated brass, molybdenum or tungsten wire having a diameter between 0.02 mm and 0.5 mm.

6. Method for manufacturing an endodontic instrument according to any one of claims 4 and 5, **characterised in that** said cutting step implements a dielectric fluid consisting of deionised water or hydrocarbon.

7. Method for manufacturing an endodontic instrument according to any one of claims 4 to 6, **characterised in that** said cleaning step is carried out by immersing said instrument in an acid bath subject to ultrasound.

8. Method for manufacturing an endodontic instrument according to any one of claims 4 to 7, **characterised in that** said instrument is traversed by an electric current during said cleaning step.

9. Method for manufacturing an endodontic instrument according to any one of claims 4 to 8, **characterised in that** it comprises a heat treatment step conducted separately from the cutting and cleaning steps, the heat treatment step consisting of exposing the endodontic instrument to temperatures of 300 to 600 degrees Celsius between 10 minutes and 5 hours.
